(19) **Europäisches Patentamt / European Patent Office / Office européen des brevets**

(11) **EP 4 521 325 A1**

(12) # EUROPEAN PATENT APPLICATION

(43) Date of publication:
**12.03.2025 Bulletin 2025/11**

(21) Application number: **23197653.1**

(22) Date of filing: **15.09.2023**

(51) International Patent Classification (IPC):
*G06Q 20/06* (2012.01)    *G06Q 20/22* (2012.01)
*G06Q 20/36* (2012.01)    *G06Q 20/38* (2012.01)
*G06Q 20/40* (2012.01)

(52) Cooperative Patent Classification (CPC):
**G06Q 20/065; G06Q 20/223; G06Q 20/3678;
G06Q 20/382; G06Q 20/3827; G06Q 20/3829;
G06Q 20/389; G06Q 20/401**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2023  GB 202313685**

(71) Applicant: **NAKA GLOBAL, financne tehnologije, d.o.o.**
**1000 Ljubljana (SI)**

(72) Inventor: **Perme, Ales**
**Ljubljana (SI)**

(74) Representative: **Horler, Philip John**
**Withers & Rogers LLP**
**2 London Bridge**
**London SE1 9RA (GB)**

(54) **SECURE SELF-CUSTODY PRIVATE KEY PAYMENT CARD AND SOFTWARE**

(57)    The present disclosure relates to systems, methods and computer programs to enable the use of a self-custody private key to authorise the transfer of an amount of cryptocurrency from a non-custodial vault associated with the self-custody private key. The self-custody private key may be stored on a payment card and used during a transaction at a point of sale, POS, terminal to authorise the transfer of cryptocurrency from a non-custodial vault.

Fig. 1

**Description**

**Technical Field**

The present disclosure relates to a self-custody private key payment card and software for authorising secure payments.

**Background**

As digital currencies like cryptocurrency gain mainstream adoption, it has become evident that the market requires a highly secure, user-friendly solution for cryptocurrency-based payment transactions. For example, there is a desire to be able to use cryptocurrency as a means for payment in everyday situations, for example in shops, with the same convenience as using conventional electronic payment means, for example, with the same convenience as using a conventional credit or debit card.

Existing cryptocurrency solutions for such transactions have a number of technical drawbacks. In some scenarios, the payer is required to use their mobile device, such as their smartphone, to scan a QR code that is presented by the merchant. The QR code launches a payment application and extracts the relevant transaction information from the QR code presented by the merchant. The transaction is then executed and a confirmation is returned to the mobile device so that proof of transaction can be shown to the merchant. However, this requires the payer to have a mobile device with them and to have an internet connection with sufficient bandwidth to carry out the transaction in a reasonable amount of time. Consequently, off-line transactions are not possible. Furthermore, the transaction process is less convenient than a conventional credit or debit card transaction.

Some other solutions require the payer to entrust the private encryption key associated with their cryptocurrency to a custodial wallet, which may be undesirable. First, it may represent a data security risk, since the custodian may experience a data breach (either accidental or malicious, for example as part of a data hack), in which case the private encryption key may be compromised. If this takes place, the payer may lose the entirety of their cryptocurrency. Furthermore, it requires the payer to have an account with the wallet custodian. For many people globally, this may be problematic, for example requiring monthly fees, proof of identity (it is estimated by the World Bank that almost one billion people globally do not have official ID) and/or proof of address.

Therefore, there is a desire for a secure, efficient, and user-friendly system that enables cryptocurrency transactions to be performed in everyday situations, without requiring the use of custodial cryptocurrency wallets.

**Summary**

In a first aspect of the disclosure there is provided an electronic device comprising: a communications interface; a self-custody private key; and a blockchain authorisation application coupled to the communications interface and configured to: receive from a point of sale, POS, terminal, via the communications interface, a blockchain authorisation request; generate a blockchain authorisation signature by signing the blockchain authorisation request; and output the blockchain authorisation signature to the communications interface for communicating to the POS terminal, wherein the blockchain authorisation signature is for authorising a transfer of an amount of cryptocurrency from a non-custodial vault associated with the self-custody private key.

In a section aspect of the disclosure there is provided a computer implemented method of authorising a cryptocurrency transaction comprising at blockchain authorisation application: receiving from a point of sale, POS, terminal, a blockchain authorisation request; generating a blockchain authorisation signature by signing the blockchain authorisation request; and outputting the blockchain authorisation signature for communication to the POS terminal, wherein the blockchain authorisation signature is for authorising a transfer of an amount of cryptocurrency from a non-custodial vault associated with the self-custody private key.

In a third aspect of the disclosure there is provided a computer program configured, when executed on one or more processors, to: generate a blockchain authorisation signature by signing a blockchain authorisation request that is received from a point of sale, POS, terminal; and output the blockchain authorisation signature for communication to the POS terminal, wherein the blockchain authorisation signature is for authorising a transfer of an amount of cryptocurrency from a non-custodial vault associated with the self-custody private key.

In a fourth aspect of the disclosure there is provided a point of sale, POS, terminal comprising: a first communications interface for communicating with a payer electronic device; a second communications interface for communicating with a payment network electronic device; and a blockchain request application configured to: output a blockchain authorisation request to the first communications interface for communicating to a blockchain authorisation application on the payer electronic device; receive a blockchain authorisation signature, via the first communications interface, from the payer electronic device; and output the blockchain authorisation signature for communicating to the payment network electronic device, wherein the blockchain authorisation signature are for authorising a transfer of an amount of cryptocurrency from a non-custodial vault associated with the self-custody private key.

In a fifth aspect of the disclosure there is provided a computer implemented method for facilitating a cryptocurrency transfer, the method comprising: outputting a blockchain authorisation request for communication from the POS terminal to a blockchain authorisation application on a payer electronic device; receiving a blockchain authorisation signature from the payer electronic device; and outputting the blockchain authorisation signature for communication from the POS terminal to a payment network electronic device, wherein the blockchain authorisation signature is for authorising a transfer of an amount of cryptocurrency from a non-custodial vault associated with the self-custody private key.

In a sixth aspect of the disclosure there is provided a computer program configured, when executed on one or more processors, to perform the method of the fifth aspect.

## Drawings

Aspects of the present disclosure are described, by way of example only, with reference to the following drawings, in which:

Figure 1 shows an example payment card in accordance with an aspect of this disclosure;

Figure 2 shows a visualisation of an example process flow for the initial configuration of the payment card of Figure 1;

Figure 3 shows a visualisation of an example processes flow for associating a non-custodial vault the payment card of Figure 1;

Figure 4 shows an example payment system that includes aspects of the present disclosure;

Figure 5 shows a visualisation of an example process performed by the blockchain request application of Figure 4;

Figure 6 shows an example of data fields that are available within the ISO standard payment protocol;

Figure 7 shows an example illustration of functionality of the acquirer of Figure 4;

Figure 8 shows a non-limiting example of hardware that may be included within the payment card 100; and

Figure 9 shows an example electronic device or computing system for carrying out the methods of the present disclosure.

## Detailed Description

A secure and efficient system is disclosed that enables users, such as consumers, to execute cryptocurrency transactions in everyday situations, for example in shops, using fully non-custodian cryptocurrency assets. The system is designed to make the transaction process efficient and straightforward, without requiring the user to have internet access at the time of the transaction.

In one aspect, a payment card has been developed that can be held by the user and used to authorise, in communications with a merchant's Point of Sale (POS) terminal, the transfer of cryptocurrency from a non-custodial vault associated. The payment card securely stores a private cryptographic key that is used to sign a blockchain authorisation request that it receives from the POS terminal. The signed blockchain authorisation request can then be sent from the POS terminal to a payment processor using conventional payment communications (for example, EMVCo compliant communications) and existing payment networks, after which the cryptocurrency transfer can be performed. The cryptocurrency transfer can only be executed if authorised by the private cryptographic key, which exists only on the payment card. Consequently, the user can use cryptocurrency to purchase goods/services from a merchant with the same ease as using a standard credit or debit card, and still maintain complete control and self-custody of the cryptocurrency assets associated with the private cryptographic key.

The POS terminal can be of a standard design, for example communicating with existing payment networks using existing standards, such as EMVCo standards, but with a novel blockchain request software application and communicates with a blockchain authorisation software application on the payment card. It is through communication between these two applications that the POS terminal may obtain a signed blockchain authorisation request. A conventional transaction software application on the POS terminal can handle conventional transaction communications with the payment network, for example using existing payment standards, such as EMVCo standards, and can include the signed blockchain authorisation within those communications. As a result, existing POS terminals may be used, simply requiring a software update to the POS terminals, thereby making the system easier and less costly to roll-out widely.

The following terminology shall be adhered to in this disclosure:

Non-custodial vault. This is a secure digital storage system that is designed to hold and manage cryptocurrency assets on a blockchain, without relying on a third-party custodian. It enables users to take full control and ownership of their private keys and assets. In contrast to custodial solutions, the user is not required to entrust their assets to a centralised entity (custodian) for safekeeping. Other terms sometimes used in the technical field are "non-custodial wallet" and "unhosted wallet".

Custodial wallet. A custodial wallet is a private key storage solution where a centralised third party - the custodian - holds the cryptographic private keys associated with cryptocurrency assets. This requires the user to entrust their cryptographic private keys, and therefore cryptocurrency assets, to the third party who will then have complete control over the assets.

Self-custody private key. A private encryption key that is held and controlled by the user, rather than by a custodian in a custodial wallet. In the present disclosure, the self-custody private key is used to control cryptocurrency assets held in a non-custodial vault.

EMV/EMVCo. Stands for "Europay, Mastercard and Visa" and is the most common example of conventional payment processes. It is often used herein as a synonym for conventional payment processes/standards, for example, those that are performed using conventional Fiat currency credit or debit card transactions.

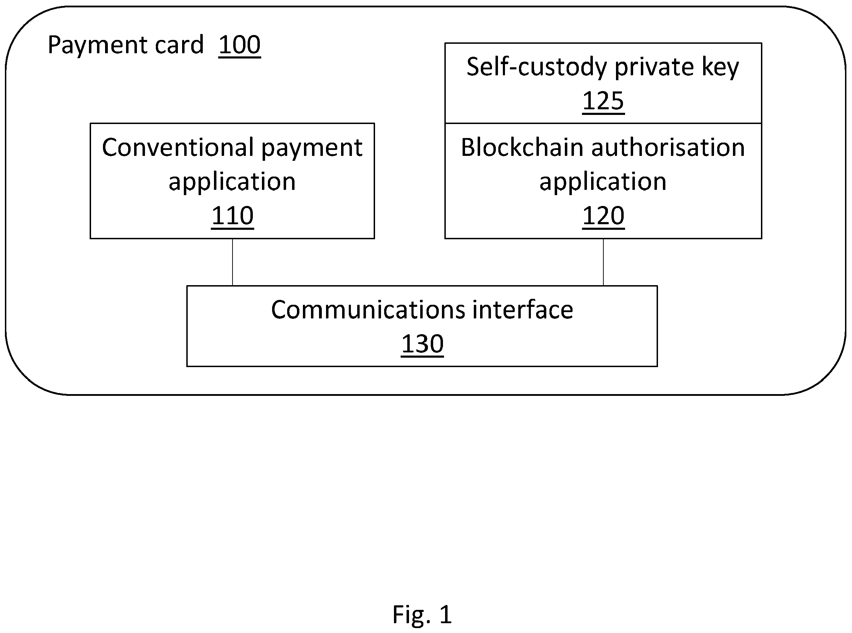

Figure 1 shows an example payment card 100 in accordance with an aspect of this disclosure. The payment card 100 comprises a conventional payment application 110, which is software for engaging in communications relating to conventional transactions, such as Fiat money credit or debit card transactions. The conventional payment application 110 conforms to at least one conventional payment standard, such as an EMVCo standard. The payment card 100 also comprises a blockchain authorisation application 120 and a securely stored self-custody private key 125. As described in more detail later, the blockchain authorisation application 120 is software configured to use the self-custody private key for authorising a transfer of cryptocurrency from a non-custodial vault associated with the self-custody private key 125. The self-custody private key 125 may be securely stored on the payment card 100 using any standard techniques that will be well understood by the skilled person, for example using a secure element (SE). As the skilled person will appreciate, the payment card may comprise a processor and storage/memory (such as non-volatile memory). The conventional payment application 110 and the blockchain authorisation application 120 may be stored in the memory and executed using the processor to perform the processes described later. The conventional payment application 110 and the blockchain authorisation application 120 may be completely separate software packages or may be different routines/modules within a single software package.

The payment card 100 also includes a communications interface 130, which may be for wireless communications (for example, NFC) and/or wired communications (for example, via a physical electrical pad on the payment card 100 that is for engaging with conductive pins on a point of sale, POS, terminal, for so-called "chip & pin" transactions). The communications interface 130 is a standard payment card communications interface that will be well understood by the skilled person and so will not be described further herein.

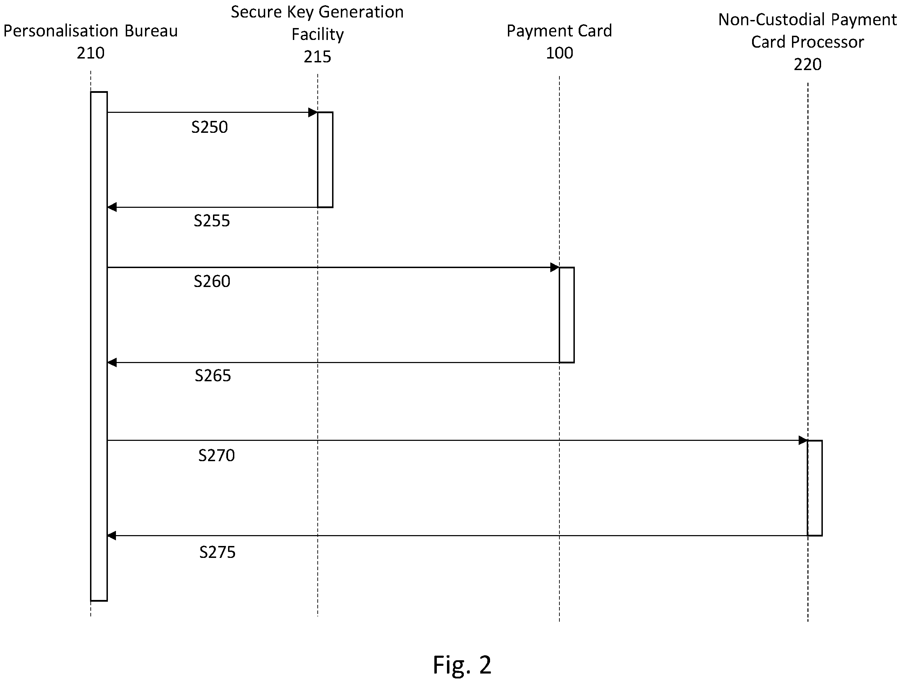

Figure 2 shows a visualisation of an example process flow for the initial configuration of the payment card 100. This process is sometimes referred to as a chip card (or EMV) personalization process, or "perso", and involves programming and configuring the microchip embedded in the card with the necessary data and security parameters. This process enables the card to communicate securely with Point of Sale, POS, terminals and perform transactions. Standard procedures for EMV personalization include data gathering, cryptographic key setup, EMV application configuration (eg, configuration of the conventional payment application 110), personalization data preparation, cryptogram generation, chip writing, security checks, and distribution, none of which will be described any further herein. Instead, Figure 2 focusses on the preparation and configuration of the blockchain authorisation application 120 and the generation of the self-custody private key 125.

In step S250, the Personalization Bureau 210 (which is the software program/entity for performing the personalization process) calls a Secure Key Generation Facility 215 (a software program/entity for generating cryptographic keys according to any suitable encryption standards) to generate a public-private key pair that is comprised of a public key and a private key. The public-private key pair are returned in Step S255. The Personalization Bureau 210 writes the private key into memory in the payment card 100 in Step S260, for example into the SE of the payment card 100, such that the private key is now the self-custody private key 125. After the confirmation of writing of the private key into the payment card 100 is received in Step 265, the Personalization Bureau 210 then irreversibly deletes the private key from its own memory so that only one copy of the private key exists, which is the self-custody private key 125. During step S260, the Personalization Bureau 210 may also write the blockchain authorisation application 120 to memory in the payment card 100, for example into the SE of the payment card 100 or any other suitable memory of the payment card 100. The blockchain authorisation application 120 is a software program having the functionality described later.

In Step S270, the Personalization Bureau 210 may securely share the public key of the public-private key pair generated by the secure key generation facility 215, and also a unique identifier of the payment card 100, with the non-custodial payment card processor 220. The non-custodial payment card processor 220 is a software program that may be stored and executed on an electronic device, such as a server, that forms part of a payment network, as described later. The unique identifier of the payment card 100 may be, for example, the primary account number (PAN) of the card, or a tokenised version of the PAN (which may be generated using any standard tokenisation algorithm). The non-custodial payment card processor 220 may securely store these two items with an association between the two of them, for example by linking them together in a database. Therefore, the non-custodial payment card processor 220 may keep a record of payment cards that comprises the unique identifier of each payment card and their public key. As explained later, the non-custodial payment card processor 220 may use this information during transactions involving the payment card 100. The process is then complete in Step S275 with an optional confirmation from the non-custodial payment card processor 220 to the personalization bureau 210.

At this stage, the payment card 100 is not associated with any particular person or cryptocurrency assets. It is ready for distribution and for self-activation/provisioning by an individual who wishes to use it to make purchases using their cryptocurrency assets. In order to activate/provision the payment card 100, it must first be associated with the user's non-custodial vault that holds the cryptocurrency they wish to transact using the payment card 100. In order to explain that process, an example process of establishing a non-custodial vault 320 will first be described so that the nature of a non-custodial vault 320 may be better understood.

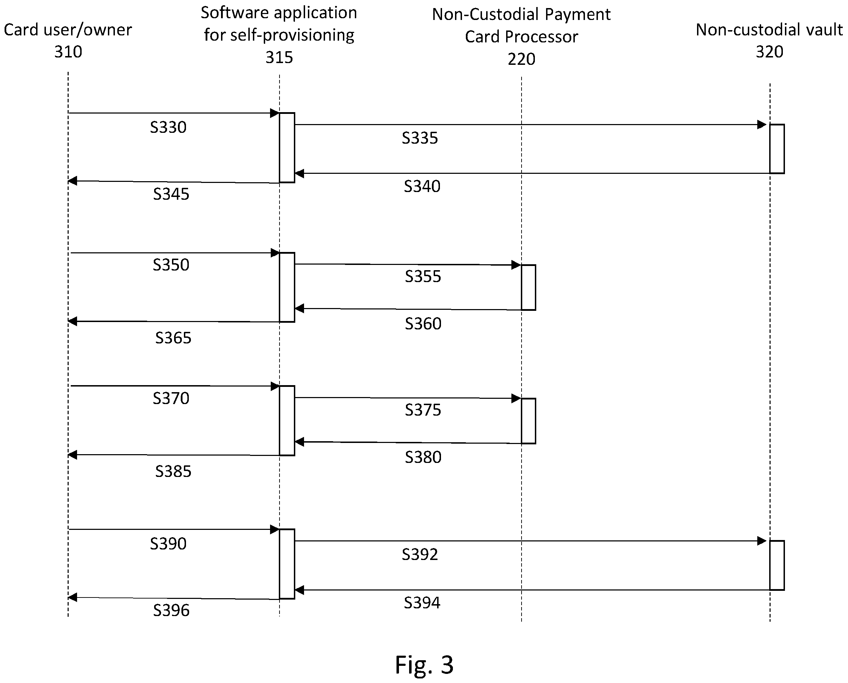

Figure 3 shows a visualisation of an example processes flow for a user activating/provisioning a non-custodial vault 320 and associating it with the payment card 100.

First, the card owner requires a non-custodial vault for storing their cryptocurrency assets. The process represented in Figure 3 starts with the establishment of a non-custodial vault. In Step S330 the card user/owner 310 opens a software application for self-provisioning 315 on a suitable electronic device, such as a smart phone, a wearable device such as a smart watch, a tablet computer, a laptop computer, a desktop computer, etc. The software application for self-provisioning 315 is a computer program configured to perform the processes described below. Using the software application for self-provisioning 315, they start the process of deploying a non-custodial vault 320, which starts in Step S335 with sending/broadcasting a transaction to a blockchain (which could be any blockchain that the software application for self-provisioning 315 is configured to make use of, such as Ethereum) using a private key that they possess. As the skilled person will understand, and so will not be described in further detail, this involves sending/broadcasting a blockchain transaction with private key signature to the nodes participating in the blockchain so that the transaction may be mined onto the blockchain. The card user/owner 310 may already possess cryptocurrency assets held in a non-custodial wallet, such as one provided by MetaMask, or Coinbase Wallet, or Trust Wallet, etc, and their private key for those assets may be used for the transaction in Step S335. In an alternative, the card user/owner 310 may create an entirely new private key for the deployment of the non-custodial vault 320. The process for establishing a wallet that holds cryptocurrency assets will be well understood by the skilled person, and is the same process that is used to establish the non-custodial vault 320, and so will not be described in further detail herein. The transaction of Step S335 deploys a smart contract to a specific address on the blockchain, which is an address that is assigned by the software application for self-provisioning 315, or the blockchain on which the non-custodial vault 320 will operate, and is unique to the smart contract of the non-custodial vault 320. As such, each individual non-custodial vault 320 that is deployed in accordance with this disclosure should have its own, unique address. In the present disclosure, the smart contract of the non-custodial vault 320 has novel transactional functionality that is described later and effectively acts as the non-custodial vault 320 that holds the user's transferred cryptocurrency. Once the transaction that is transmitted or broadcast to the blockchain in step S335 is mined onto the blockchain, in step S340 a notification of successful provisioning is returned to the software application for self-provisioning 315, and in Step S345 a notification of success is optionally displayed to the user 310. The software application for self-provisioning 315 now has the blockchain address for the non-custodial vault 320.

The process of Steps S330 to S345 is essentially a standard process for establishing a non-custodial wallet on a blockchain and so, as the skilled person will understand, the owner/user 310 holding the private key used for the transaction of Step S335 now has full ownership of the non-custodial vault 320. They can interact with it by invoking its functions, can deposit cryptocurrency assets into it, withdraw assets from it, and perform other actions based on the smart contract's logic. Whilst the Steps of S330 to S345 are all shown as immediately preceding Step S350, in practice they may take place at any time. The user/owner 310 may establish, and make use of, a non-custodial vault 320 using the software application for self-provisioning 315 long before they wish to activate a payment card 100, or indeed before they are even aware that they might want to use a payment card 100.

In order to provision/activate the payment card 100, details of the payment card 100 are required by the software application for self-provisioning 315, in particular a unique identifier of the payment card 100 and the public key of the payment card 100. The card owner 310 may input the relevant information into the software application for self-provisioning 315 in any suitable way, for example by scanning a visual code such as a QR code that is printed on the payment card 100 and that is configured to open the software application for self-provisioning 315. The visual code may encode a unique identifier of the payment card 100, for example, the payment card's PAN or a tokenised version of the PAN, or some other suitable unique identifier, and/or the public key of the payment card 100 (i.e., the public key counterpart of the self-custody private key 125). Alternatively, it may encode an address from which the software application for self-provisioning 315 may fetch the unique identifier of the payment card 100 and/or the public key of the payment card 100. For example, each payment card may include a visual code that encodes a URL that is unique to the card and leads to a system that maintains a record of unique card identifiers and associated public keys (for example, the non-custodial payment card processor 220). In this example, the uniqueness of the URL is what would enable the system to return the correct unique card identifier and associated public key for the payment card 100.

In the example of Figure 3, the payment card 100 includes a visual code (such as a QR code) that opens the software application for self-provisioning 315 and encodes a URL that directs the software application for self-provisioning 315 to the non-custodial payment card processor 220 so that the record of payment cards that is maintained by the non-custodial payment card processor 220 may be used to check to see if the payment card 100 has already been provisioned. Step S355 represents the software application for self-provisioning 315 using that URL to contact the non-custodial payment card processor 220. The non-custodial payment card processor 220 can then query the routing tables (i.e., the record of payment cards) held by the non-custodial payment card processor 220, inquiring about the existence of any routes that may or may not exist for the payment card 100. Optionally, the software application for self-provisioning 315 may then inspect the returned routing records, returned in step S360, to see if the payment card 100 is already paired with a non-custodial vault, or alternatively in Step S360 a message indicating whether or not the payment card 100 is already paired with a non-custodial vault may be sent to the software application for self-provisioning 315 (as mentioned below). The routing tables will typically include a record of payment card identifiers and addresses (eg, smart contract addresses) of non-custodial vaults that have been paired with them, and with each payment card being linked to a value that forms part of the URL encoded in the visual code of the payment card 100 and is unique to the payment card. The value that is unique to the payment card 100, and is typically visually encoded on the payment card 100 may have been set during the process of Figure 2 and communicated by the personalisation bureau 210 to the non-custodia payment card processor 220 as part of the communication of Step S270, so that it may be associated at the non-custodial payment card processor 220 with the unique payment card identifier. Consequently, during the process of Figure 3, using the value that is unique to the payment card 100, the unique payment card identifier (i.e., the PAN or tokenised PAN) can be found in the record of payment cards such that it can be seen if there is any associated non-custodial vault address for the identified payment card. The value may be set by the personalisation bureau 210 and saved with the non-custodial payment card processor 220 in Step S270 described above, and may effectively act as an address for the record of the payment card 100 that is held by the non-custodial payment card processor 220. As mentioned earlier, if the unique identifier of the payment card 100 is not recorded in the routing tables as having been paired with a non-custodial vault, then in Step S360 a confirmation that pairing can continue may be returned to the software application for self-provisioning 315. However, if the payment card 100 has already been paired with a non-custodial vault, a failure notification may be sent in Step S360. Alternatively, as mentioned earlier, the routing records for the payment card 100 may be returned in Step S360 and the software application for self-provisioning 315 may make the determination. Optionally, in Step S365 an update showing the status of the pairing process may be displayed to the card owner 310.

If the payment card 100 has not already been paired with a non-custodial vault, then in Step S370 the card owner 310 may communicate that they wish to proceed with card pairing to the software application for self-provisioning 315. In Step S375, the software application for self-provisioning 315 then sends the blockchain address of the non-custodial vault 320 to the non-custodial payment card processor 220, which can then update its routing tables to include the association with the unique identifier of the payment card 100 and the address of the non-custodial vault 320. A one way association between the payment card 100 and the non-custodial vault 320 is now created (i.e., the non-custodial payment card processor 220 is aware of the non-custodial vault 320). In Step S380 a confirmation of update may be sent from the non-custodial payment card processor 220 to the software application for self-provisioning 315, and optionally a confirmation may be displayed to the card owner 310 in step S385.

Finally, the non-custodial vault 320 is updated to complete a two-way association between the payment card 100 and the non-custodial vault 320 (i.e., by virtue of this update the non-custodial vault 320 will be aware of the payment card 100 via the payment card's public key). Step S390 is optional and is an opportunity for the card user 310 to confirm that they would like to complete the pairing. In Step S392, the software application for self-provisioning 315 uses the private key that was used for the transaction of Step S335 to issue an update of the non-custodial vault 320. For example, the update may be to the parameters of the non-custodial vault 320 so that they then comprise the public key of the payment card 100. This update saves the public key of the payment card 100 into the validating parameters of the non-custodial vault 320 so that the non-custodial vault 320 can in the future validate digital signatures generated using the self-custody private key 125. The process for updating smart contract parameters will be well understood by the skilled person, and so will not be described further herein.

The payment card 100 is now successfully provisioned and a two-way association between the non-custodial vault and the payment card 100 is established. The payment card 100 is now ready for making payments and, as will be appreciated, the process is entirely user controlled and does not require them to produce any proof of identity or address.

As a result, the payment card 100 can be owned and used by people who might previously have been excluded from using electronic payment means because of a lack of identity documentation and/or address documentation. Furthermore, the card user 310 may remain completely anonymous if they wish, which enables the payment card 100 to be used anonymously by the owner 310. Optionally, in Step S394 a confirmation of completion may be sent from the non-custodial vault 320 to the software application for self-provisioning 315, and a confirmation may be displayed to the card owner 310 in step S396.

It will be appreciated that the process of Figure 3 is just one example way of implementing the process. Alternative implementations may include fewer steps. For example, any one or more of Steps S360, S365, S370, S385, S390, S394 and S396 may be omitted. Furthermore, Steps S355 and S375 may effectively be merged such that in Step S355 the software application for self-provisioning 315 sends to the non-custodial payment card processor 220 all of the information described above in relation to Steps S355 and S375. In this case, Steps S360 and S375 may be omitted. In a further alternative, the non-custodial vault 320 may be deployed (Steps S330 to S345) after the status of the payment card 100 has been checked (Steps S350 to S365). Additionally or alternatively, Steps S390 to S396 may take place before, or in parallel with, Steps S370-S385.

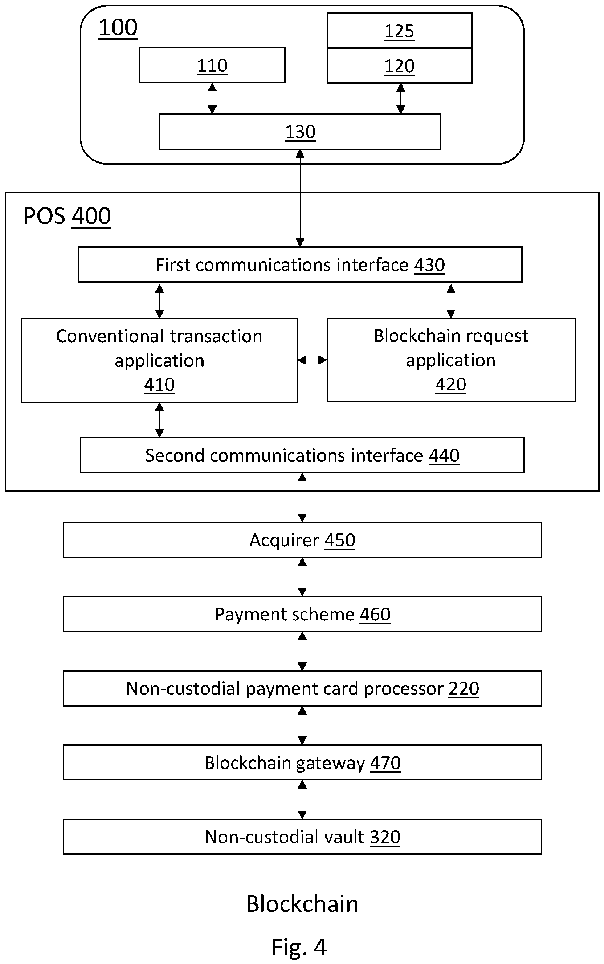

Figure 4 shows an example payment system that includes aspects of the present disclosure. The system includes the payment card 100 that is described earlier. It also includes a Point of Sale, POS, terminal 400, which is suitable for use by a merchant to facilitate conventional card transactions. The POS terminal 400 comprises a first communications interface 430 that is suitable for communicating with the payment card 100, for example by NFC and/or by physical connection between conductive pins on the POS terminal 400 and corresponding pads on the payment card 100. The POS terminal 400 also comprises a second communications interface 440 that is suitable for communicating with an electronic device that is part of the payment network, for example using any suitable communications mechanisms and protocol.

The POS terminal 400 also comprises a conventional transaction application 410. The conventional transaction application 410 is suitable for handling conventional transactions with conventional payment cards, for example conventional credit or debit card transactions using EMVCo standards. However, in this example implementation, in addition to being configured to handle conventional transactions, the conventional transaction application 410 is also configured to identify when a payment card it is communicating with is capable of authorising a cryptocurrency transaction. In some examples, the payment card 100 may be capable of only authorising cryptocurrency transactions (for example because the conventional payment application 110 on the payment card is not provisioned with sufficient conventional payment information to authorise such a transaction). In other cases, it may be suitable for authorising either type of transaction, in which case the POS terminal 400 may be configured to prompt the payer to choose a conventional transaction or a cryptocurrency transaction when the conventional transaction application 410 identifies that the payment card 100 is capable of authorising a cryptocurrency transaction.

Initially in a transaction involving the POS terminal 400 and the payment card 100, the conventional transaction application 410 may communicate with the conventional payment application 110 via the first communications interface 430 on the POS terminal 400 and the communications interface 130 on the payment card 100. This communication may involve a number of back-and-forth data exchanges between the two software applications in accordance with convention payment standards, for example EMVCo standards. Typical processes that are performed at this stage may include any one or more of: checking conventional transaction security keys held by the conventional payment application 110, checking any PIN entered into the POS terminal 400 by the card owner (if required), etc. All of these processes are standard and follow long-existing standards, so shall not be described further herein.

In addition to being configured to handle conventional payment communications and processing, the conventional transaction application 410 is also configured to identify when the payment card 100 is suitable for authorising a cryptocurrency transaction. It may do this in a number of different ways. In one example, it may recognise that the application ID, AID, for the conventional payment application 110 (which is a standard piece of data that is communicated from the conventional payment application 110 to the conventional transaction application 410 during standard EMVCo communications) is registered as indicating that the payment card 100 is suitable for authorising a cryptocurrency transaction. As the skilled person will understand, every different type of payment card on the market, for example VISA®, Mastercard®, etc, will have an AID with the AID functionalities of that type of payment card defined. Payment cards 100 of the type described herein may have an AID that indicates a cryptocurrency capability. To that end, the POS terminal 400 may possess a list of AIDs that indicate an ability to authorise a cryptocurrency transaction (for example, held in memory in the POS terminal 400), or it may have access to such a list, for example by sending the AID for the payment card 100 to another entity in the payment network via the second communications interface 440, and receiving in return an indication of whether or not the payment card 100 is capable of authorising cryptocurrency transactions.

Having identified that the payment card 100 is configured for authorising cryptocurrency transactions, the conventional transaction application 410 initiates a blockchain authorisation process. First, it generates transaction data that defines aspects of the transaction that is to take place, which it may then communicate to the blockchain request application 420 as part of an instruction to communicate a blockchain authorisation request, BAR, to the payer electronic device.

The blockchain request application 420 may be a fully separate software program running on the POS terminal 400, or may be a routine or a library within the conventional transaction application 410, etc. Regardless of how it is implemented, the blockchain request application 420 will have the functionality described below.

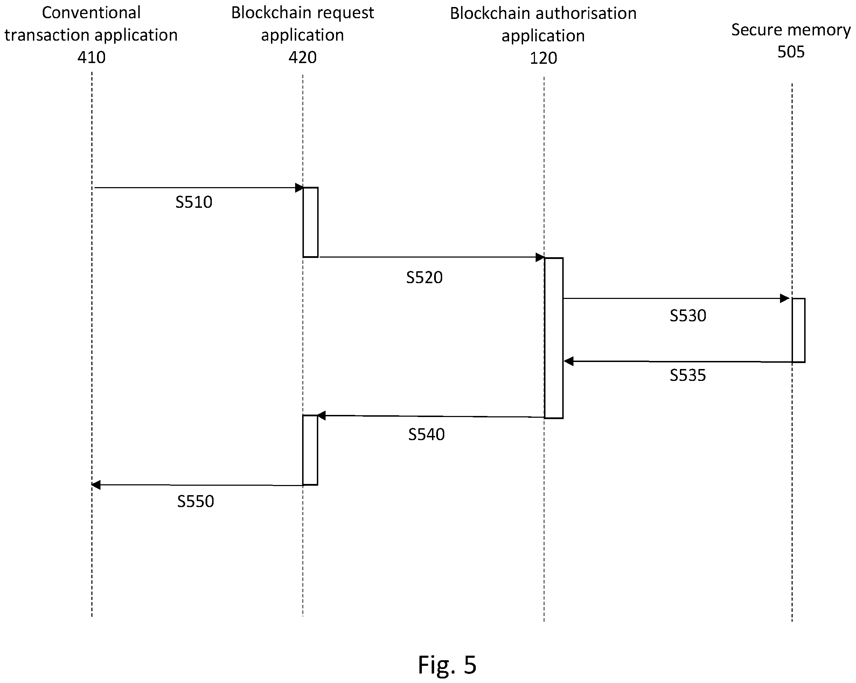

Figure 5 shows a visualisation of an example process performed by the blockchain request application 420. In Step S510, the blockchain request application 420 receives instruction from the conventional transaction application 410, which in one example may include the transaction data. The transaction data may include at least one of: an amount to be paid to a payee; a currency associated with the amount to be paid to the payee; a payee identifier. The conventional transaction application 410 will have established all of this data as part of it conventional EMVCo communications with the conventional payment application 110.

The amount to be paid to the payee may be an unsigned integer and may, for example, be up to 6 bytes long (although other sizes may be used, depending on implementation decisions). This amount will have been set by the merchant, for example as the price for the goods/services being purchased from them.

The currency may be any type of currency, including Fiat money and cryptocurrency, set by the merchant. For example, it may be USD, GBP, EUR, ETH, BTC, etc. It may, for example, be up to two bytes long (although other sizes may be used, depending on implementation decisions) and may conform to any standard representation of a currency, such as the ISO 4217 NUMERIC standard. It should be appreciated that regardless of the currency, the payment card 100 will ultimately be authorising a transfer of cryptocurrency of the type associated with the non-custodial vault 320. If the currency identified in the transaction data is different to the currency of the cryptocurrency transfer, a conversion may be performed when funds are ultimately transferred from the recipient of the cryptocurrency (for example, the acquirer) to the merchant, as explained later.

The payee identifier is sometimes referred to as the merchant ID or the Card Acceptor Identification Code Data (according to EMVCo standards) and uniquely identifies the entity who should ultimately be paid when settlement takes place, i.e., the merchant. As per conventional payment standards, this ID may be set when the merchant is onboarded by the acquirer. This value may be, for example, up to 16 bytes long (although other sizes may be used, depending on implementation decisions) and may, for instance, contain only alphanumeric printable characters pertaining to ASCII-127 format.

Having received the transaction data, the blockchain request application 420 may use it to generate a blockchain authorisation request (BAR). The BAR comprises at least the transaction data described above, for example concatenating in a predetermined order the pieces transaction data described above. Optionally, the blockchain request application 420 may also determine a security value that is generated based on the rest of the content of the BAR (for example, a value that is akin to a hash or checksum of the rest of the content of the BAR). The security value would also be included in the BAR so that the integrity of the contents of the received BAR may be checked by the blockchain authorisation application 120. In an alternative, rather than the blockchain request application 420 generating the BAR, the conventional transaction application 410 may communicate the transaction data to any suitable entity (for example any suitable entity in the payment network, to which it may output the transaction data via the second communications interface 440) with a request for that entity to generate the BAR. The generated BAR may then be returned and the instruction sent from the conventional transaction application 410 to the blockchain request application 420 in Step S510 may include the BAR. In any event, in Step S520, the blockchain request application 420 communicates the BAR to the blockchain authorisation application 120 via the first communications interface 430 and the communications interface 130 on the payment card 100.

The blockchain authorisation application 120 is configured to produce a digital signature by signing the BAR using the self-custody private key 125. This is referred to from here on as a the blockchain authorisation signature. The blockchain authorisation application 120 is configured to do this in a predetermined way that conforms to the signature requirements of the non-custodial vault 320. For example, it may optionally first hash the BAR, for example using the SHA-256 hashing algorithm (or any other suitable hashing algorithm). It may then sign the hash of the BAR using the self-custody private key 125 to generate the blockchain authorisation signature. To that end, in steps S530 and S535 it may retrieve the self-custody private key 125 from the secure memory 505 in which it is stored (for example from secure non-volatile memory such as a secure element, SE) and then use any suitable cryptographic signature algorithm to generate the signature. In an alternative, in step S530 the data to be signed (i.e., the BAR or hash of the BAR) may be sent to the secure memory which may comprise an algorithm for signing the data using the self-custody private key 125 and then return the digital signature in Step S535. One example of a cryptographic signature algorithm that may be used is an elliptic curve digital signature algorithm (ECDSA) using a prime number and parameters corresponding to an elliptic curve family, such as secp256k1. Such curves are supported by a large number of blockchains, such as Bitcoin, Ethereum, Litecoin, TRON, Tezos, BNB Chain, etc, and so can be used for authentication by the non-custodial vault 320. The skilled person will appreciate that the blockchain authorisation application 120 may alternatively be configured to use any other blockchain supported digital signature process and algorithm.

In Step S540, the blockchain authorisation signature is returned to the blockchain request application 420 via the communications interface 130 of the payment card 100 and the first communications interface 430.

In Step S550, the blockchain authorisation signature and optionally the BAR are sent from the blockchain request application 420 to the conventional transaction application 410. Having received this data, the conventional transaction application 410 is configured to create an EMVCo compliant data packet by combining the blockchain authorisation signature (and optionally the BAR) with conventional EMVCo data in a way that enables the EMVCo compliant data packet to be sent on to the payment network via the second communications interface 440. For example, the blockchain authorisation signature (and optionally the BAR) may be included in the Additional Data field of the ISO standard protocol for financial transaction card originated interchange messaging used by EMVCo. The Additional Data field allows for EMVCo protocol based communication to relate to non-mandatory additional data outside of the scope of the EMVCo Mandatory data. The created EMVCo data packet may be referred to from here on as a "conventional payment data packet".

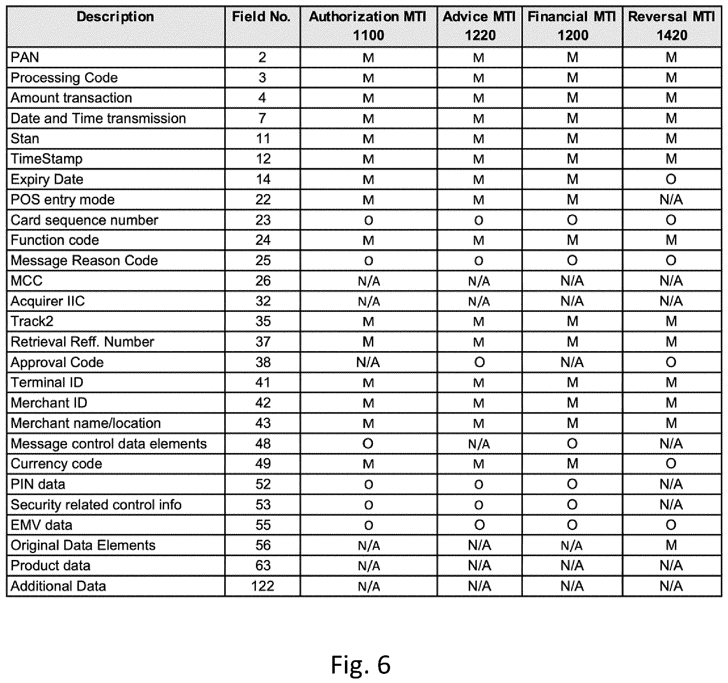

Figure 6 shows an example of data fields that are available within the ISO standard protocol. As can be seen, field 122 relates to "Additional Data" and this is where the blockchain authorisation signature (and optionally the BAR) can be included. The available size of the data field may vary depending on specific use case and implementation, but in the processes of the present disclosure typically 65 bytes are used for the blockchain authorisation signature (and optionally the BAR). The conventional transaction application 410 may be configured to include data for any or all other data fields represented in Figure 6 and/or additional data not included in it. By generating an EMVCo compliant data packet in this way, the blockchain authorisation signature (and optionally the BAR) may be forwarded to the non-custodial vault 320 via the payment network entities so that the blockchain authorisation signature can be checked and, if passed, the instructed cryptocurrency transferred. As a result, existing payment network infrastructure may be used to carry the data required to instruct and authorise the cryptocurrency transfer, thereby improving efficiency and scalability, since a new, dedicated infrastructure is not required.

In the example system represented in Figure 4, the EMVCo data packet (the conventional payment data packet) is communicated by the conventional transaction application 410 to the acquirer 450 via the second communications interface 440, in accordance with standard EMVCo communications processes and protocols. As will be well understood by the skilled person, in the realm of payment schemes the acquirer's role is to facilitate electronic payment transactions. Payment schemes encompass systems designed to facilitate the transfer of funds among various stakeholders, including consumers, merchants, financial institutions, and banks. Acquirers play a role in this intricate network, serving as intermediaries that bridge the gap between merchants and payment networks. They facilitate the seamless movement of both funds and information during the course of a payment transaction.

Merchant onboarding with an acquirer, which is also referred to as the process of integrating businesses with an acquirer, can be significant within the realm of payment processing. Acquirers, which can be either financial institutions or payment service providers, serve as the catalysts that enable enterprises to conduct electronic payment transactions, permitting them to accept diverse payment methods like credit cards, debit cards, and digital wallets from their customers. All of these conventional sources of funds, although diverse, are custodian sources. However, with the payment card 100 disclosed herein, the existing payment network and infrastructure is used to handle payments using non-custodial cryptocurrency vaults.

One role that falls within the acquirer's responsibilities is the post-transaction settlement process. Following a successful transaction, the acquirer takes on the responsibility of transferring funds between the merchant and the issuing bank. This entails moving the purchase amount received from the cardholder's account during payment to the merchant's account, deducting any applicable fees and interchange charges along the way.

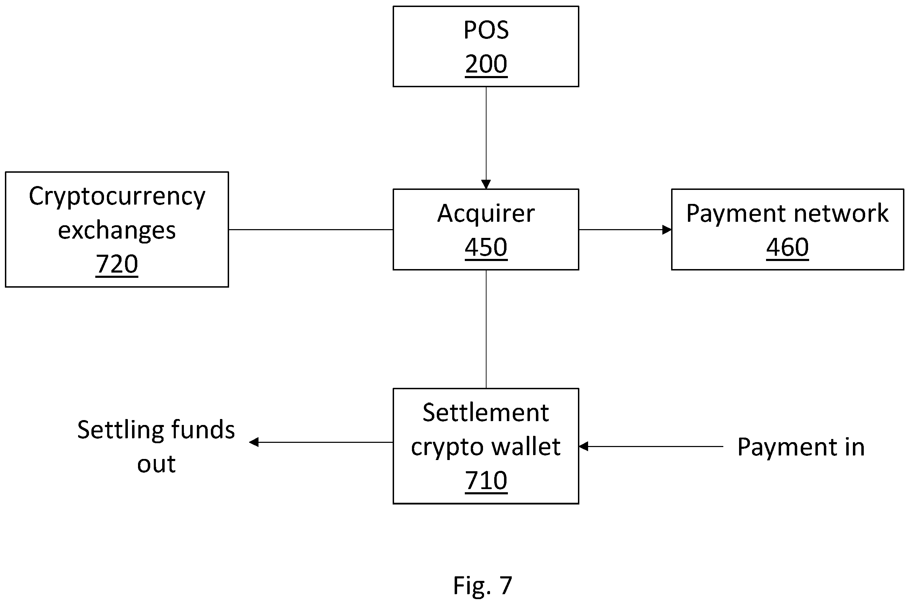

Figure 7 shows an example illustration of functionality of the acquirer 450 according to the present disclosure. The acquirer 450 may have all of the standard/typical functionality of a convention payment acquirer, and also have the functionality represented in Figure 7 that is particular to the handling of cryptocurrency transactions.

For the acquirer 450 to be able to accept funds in the form of cryptocurrency from a non-custodial vault 320, the acquirer 450 should have a settlement crypto wallet 710 in order to receive the transacted cryptocurrency. The settlement crypto wallet 710 will be capable of receiving the same type of cryptocurrency (for example, ETH) as is held by the non-custodial vault 320. The settlement crypto wallet 710 may be any suitable, known type of crypto wallet and may be deployed by the acquirer 450 in any suitable, known way, and so shall not be described further herein. As can be seen, the settlement crypto wallet 710 is capable of receiving cryptocurrency payments in, for example from a non-custodial vault 320, and paying settling funds out to merchants (optionally via one or more currency exchanges if the merchant currency is different to the cryptocurrency of the settlement crypto wallet 710).

Acquirers often deal with different currencies when facilitating payment transactions for merchants who conduct international business or accept payments from customers using foreign currencies. Handling multiple currencies generally involves currency conversion and settlement. Handling payments in Crypto Currency is not an exception.

If the type of currency identified in the EMVCo data packet (conventional payment data packet) from the POS terminal 200 (i.e., the currency associated with the amount to be paid to the payee, which is part of the EMVCo data packet and also part of the BAR) is different to that in which the cryptocurrency transaction will be performed (i.e., different to the currency of the settlement crypto wallet 710), the acquirer 450 may obtain a conversion/exchange rate for the transaction from a cryptocurrency exchange 720.

Before forwarding EMVCo data packet (conventional payment data packet) to the next entity in the payment network 460, the acquirer 450 may be configured to modify/update the conventional payment data packet by appending some further data. For example, the acquirer 450 may append an address (for example, a smart contract ID) for the settlement crypto wallet 710 to which the cryptocurrency should be transferred (and optionally, if the acquirer 450 has many different settlement crypto wallets, it may be configured first to select the most appropriate one based on internal logic). If a currency conversion is being performed, the acquirer 450 may also convert the payment amount identified in the EMVCo data packet to the corresponding cryptocurrency amount using an exchange rate obtained from the cryptocurrency exchange 720. It may then append the cryptocurrency amount and optionally also an identification of the cryptocurrency type (eg, ETH) to the payment information.

The updated conventional payment data packet, including the appended cryptocurrency transaction information (i.e., acquirer wallet address, cryptocurrency amount and optionally cryptocurrency type) may then be forwarded on to the next entity in the payment network, which in this example is a payment scheme entity 460. The updated conventional payment data packet may conform to conventional payment standards, such as EMVCo standards, or may conform to any other standards agreed between the acquirer 450 and the payment scheme 460.

The payment scheme entity 460 may generate a transaction request that includes a payload that it creates using at least some of the content of the received updated conventional payment data packet and optionally data that it generates itself, such as a unique transaction identifier, and optionally a payment scheme signature that it generates by signing the payload. The transition request may further comprise other data that will be useful to downstream entities in the payment network of Figure 4, for example other, unsigned data that it takes from the updated conventional payment data packet, or any other data that the payment scheme entity 460 generated. The transaction request is then forwarded on to the non-custodial payment card processor 220. Optionally, the payment scheme 460 may also check the integrity and validity of the updated conventional payment data packet received from the acquirer 450, for example by checking a digital signature that the acquirer 450 has made for the data. In this way, it can be confident that none of the information has been tampered with or corrupted, and that it has indeed been received from an authorised acquirer. Integrity and validity checking is a standard processes that is performed by payment scheme entities and so shall not be described further herein. As mentioned above, the payment scheme entity 460 may optionally sign the payload with its own private key so that downstream entities can check the integrity and authenticity of the data they receive.

Consequently, the payload of the transaction request output by the payment scheme entity 460 to the non-custodial payment card processor 220 may comprise the following:

The blockchain authorisation signature that was generated using the self-custody private key 125 (the self-custody private key is shown below as PK_CARD))

The address of the acquirer's settlement crypto wallet that was added by the acquirer 450 (shown below as ACQ_ID)

The amount of blockchain based cryptocurrency to be transferred from the non-custodial vault to the acquirer, that was added by the acquirer 450 (shown below as BC_AMT)

The payment scheme-wide global unique identifier of the transaction, that was added by the payment scheme entity 460 (shown below as TX_ID)

The transaction request may also include a signature of the payload using the payment scheme's private key (the payment scheme's private key is shown below as PK_SCHEME).

The payment scheme's signature may effectively be two nested signed payloads that may be represented as follows (although different concatenation orderings may alternatively be used):

$$\left\{ \left\{ \text{BAR} \right\}_{\text{PK\_CARD}}, \text{TX\_ID}, \text{BC\_AMT}, \text{ACQ\_ID} \right\}_{\text{PK\_SCHEME}}$$

The transaction request output by the payment scheme 460 may also comprise the blockchain authorisation request (BAR), or alternatively it may comprise all of the items of information that make up the BAR, since those are all included as standard pieces of information in the EMVCo data packet. It will be appreciated from the above that the payment scheme entity 460 may output to the non-custodial payment card processor 220 a transaction request that includes all of the received updated conventional payment data packet, or the payment scheme entity 460 may strip out from the received updated conventional payment data packet the items of information identified above (and also the unique payment card identifier) and forward those to the non-custodial payment card processor 220.

After receiving the transaction request from the payment scheme entity 460, the non-custodial payment card processor 220 may use the unique payment card identifier (eg, the PAN or tokenised PAN) that is included within the conventional EMVCo data to find the public address of the associated non-custodial vault 320, for example by using the routing information that was established during the process described with reference to Figure 3. It may then send a transaction instruction that includes all of the relevant transactional data (for example, the entire received transaction request, or just the items of information that the non-custodial vault 320 requires, which are identified below) to the identified non-custodial vault 320, for example via the blockchain gateway 470. The blockchain gateway 470 effectively acts as a type of API between the non-custodial payment card processor 220 and the non-custodial vault 320 so that the relevant data can be correctly communicated and received by the non-custodial vault 320.

The non-custodial vault 320 is configured to check the authenticity and integrity of the received transaction instruction. For this purpose, it may comprise an authorisation validator, which is a computer program/routine/library for carrying out authenticity and integrity checks.

The authorisation validator may be configured first to check the outer signature that is applied by payment scheme entity 460, as explained above (i.e., the digital signature made by the private key of the payment scheme (PK_SCHEME)). It may do this using any suitable, known cryptographic process, for example using the payload of the payment scheme signature (i.e., the data that was signed using PK_SCHEME) and a public key associated with payment scheme 460. For example, the authorisation validator may be configured to recreate, from the received data, the message that was signed by the payment scheme entity 460 (i.e., recreate the message comprising the blockchain authorisation signature, the ACQ_ID, the BC_AMT and the TX_ID, as explained above), and use it along with the public key of the payment scheme entity 460 and the digital signature of the payment scheme entity 460 to check the validity and integrity of the received data. If that check is cleared, then the data is confirmed as having originated from the payment scheme entity 460 and not been modified in any way before being received by the non-custodial vault 320. Having passed that check, the authorisation validator may then check the content and the validity of the BAR and the blockchain authorisation signature. Again, it may do this using any suitable, known cryptographic process, for example using the BAR and the counterpart public key of the self-custody private key 125 (the non-custodial vault 320 having stored a copy of that public key during the process described with reference to Figure 3). If the unsigned BAR is included in the EMVCo data packet output from the POS terminal 200 and is part of the transaction instruction received by the non-custodial vault 320, it may use that BAR in the process of this check. If the unsigned BAR is not included in the EMVCo data packet output from the POS terminal 200, the authorisation validator may be configured to recreate the BAR in the same way that the blockchain request application 420 is configured to create the BAR (since all of the required data, such as the amount to be paid to a payee, the currency associated with the amount to be paid to a payee, and the payee identifier, are all included in the conventional EMVCo data packet and will have been included in the data that is sent through the payment network and will be included in the transaction instruction). If that check is cleared, then the authorisation validator will have confirmed that the content of the BAR was signed by the self-custody private key 125 and has not been altered in any way during the communications processes between the payment card 100 and the non-custodial vault 320.

In a more detailed, non-limiting example, the authorization validator may be configured to check each of the digital signatures by following these processes:

**1. Hash Computation:** computes the hash value of the payload that was signed using the same hash algorithm used by the signer.

**2. Comparison:** compare the computed hash value with the decrypted hash value from the signature, which was decrypted using the public key associated with the signer (i.e., the public key of the payment scheme entity 460, or the public key that is stored in the non-custodial vault 320 and that corresponds to the self-custody private key 125). If they match, it indicates that the received data has not been altered since it was signed.

**3. Public Key Verification:** verify that the digital signature was indeed created using the private key by using the public key provided for verification. If the signature is valid and created by the corresponding private key, the document is considered authentic.

When all of the payload validation has been completed successfully, the non-custodial vault 320 may proceed with the transfer of funds to the designated acquirer settlement crypto wallet 710.

Having cleared all of the authorisation checks so that it is confirmed that the blockchain authorisation signature originated from the payment card 100 and that the other cryptocurrency transaction information correctly originated from the acquirer 450 and approved by the payment scheme 460, a novel two-step funds transfer process may be performed by a transfer of funds algorithm.

In particular, the non-custodial vault may comprise a transfer of funds method/algorithm (for example, a software routine, or code, or program, or library) for reserving or locking funds prior to actually transferring them. The transfer of funds method/algorithm typically includes conditions that need to be met for funds to be finally released to the designated Acquirer's Settlement Crypto Wallet 710. This method/algorithm may be executed after successful completion of the authorisation process described above and may include the following process steps:

1. **Funds Reservation:** The non-custodial vault's 320 transfer of funds method/algorithm may first reserve/lock the funds in the non-custodial vault 320 (and also check that the required amount of cryptocurrency is held by the non-custodial 320, and is not already reserved). Once reserved/locked, the non-custodial vault may output a reservation confirmation to the payment network (for example, output to the non-custodial payment card processor 220 via the blockchain gateway 470). This confirmation may be communicated through the payment network of Figure 4 to the POS terminal 400 and act as a positive answer and authorisation of completing the exchange between the merchant and the consumer. In this way, the merchant and consumer may receive a very quick confirmation, without having to wait for a blockchain transaction to be mined, so that the goods/services being paid for by the consumer may be taken by the consumer. Whilst an amount of cryptocurrency is reserved within the non-custodial vault 320, the logic of the non-custodial vault 320 will not allow that cryptocurrency to be used for any other transaction instructions received by the non-custodial vault 320 (for example, if the non-custodial vault 320 holds x amount of cryptocurrency and a transaction instruction is received to transfer all of the held cryptocurrency, whilst that cryptocurrency is reserved the logic of the non-custodial vault 320 will not allow the cryptocurrency to be used such that any subsequently received transaction instructions will not be effective).

2. **Condition Verification:** Subsequently, the transfer of funds method/algorithm may verify whether the conditions for finally releasing the reserved funds to the acquirer's settlement crypto wallet have been met. This verification may be based on a specific event, namely the explicitly requested release of funds to be transferred to the designated Acquirer's Settlement Crypto Wallet 710, or a preset/predetermined time period for auto release of reserved funds has been met.

For example, and as will be understood by a person skilled in electronic payment processes, during a transaction that utilizes a payment network having multiple entities there could be processes related to the cancellation or reversal of a payment transaction. Terms used in these cases are "auto reversal" and "technical reversal", and are typically used in the context of electronic payments, such as credit card transactions or automated clearinghouse (ACH) transfers. Auto reversal, short for "automatic reversal", refers to a situation where a payment transaction is automatically canceled or reversed by the payment system without the need for manual intervention. This can happen for various reasons, such as technical errors, fraud prevention measures, or discrepancies in the payment information. Common scenarios for auto reversals include technical errors and suspected fraud.

A technical reversal, sometimes also referred to as a "tech reversal", is a specific type of auto reversal that occurs due to technical issues or errors in the payment processing system. Unlike regular auto reversals, which can have various triggers, a technical reversal specifically points to a technical problem or malfunction in the system that led to the reversal.

For example, if a blockchain gateway experiences a technical glitch during the processing of a transaction, it may generate a technical reversal to undo the transaction and prevent incorrect billing or other issues. This type of reversal typically indicates that the problem was on the side of the payment infrastructure and not due to actions or decisions made by the payer or payee.

Both auto reversals and technical reversals are important mechanisms in the payment industry to maintain the reliability and security of electronic payment systems. They help ensure that transactions are accurate, valid, and conducted smoothly, while also safeguarding against errors and fraud.

Previously with cryptocurrency transactions, such reversals have not been possible because the transfer is only deemed to be completed when the blockchain transaction is mined, which is irreversible. However, the non-custodial vault 320 of the present disclosure enables such reversal processes because it locks/reserves the cryptocurrency first and only later releases the funds for transfer after the predetermined conditions are met. For example, a condition for releasing the funds may be that a predetermined period of time has elapsed since they were lock/reserved (for example, after 30 minutes, or one hour, or two hours, or four hours, or eight hours, etc), with no reason for reversal having been identified during that period of time (for example, no subsequent failure or reversal notifications, such as those indicative of an auto reversal or technical reversal, have been received from any of the payment network entities, such as the non-custodial payment card processor 220).

3. **Funds Release:** Once the conditions are met, the non-custodial vault 320 may execute the code to release the reserved funds to the specified Acquirer's Settlement Crypto Wallet 710, for example using any standard, non-custodial wallet transaction process that will be well understood by the skilled person, such as by broadcasting a transaction to a blockchain to be mined onto the blockchain.

4. **Fallback Mechanism:** An optional fallback mechanism in the non-custodial vault 720 may handle cases where conditions of step 2 are not met. This means that funds are not permanently locked but are released back to the non-custodial vault 320 (i.e., un-reserved/unlocked) if conditions are not met - for instance when an auto-reversal is issued.

By performing this two step process of funds reservation and then release if conditions have been met enable both a fast completion of the transaction between the merchant and the payer, whilst also enabling a reversal of the fund transfer if post-reservation conditions for funds release are not met. The ability to reverse fund transfers is a feature of conventional payment processes, such as those involving conventional credit or debit cards, but has not previously been possible for cryptocurrency payments where a transaction is irreversible once it has been mined onto a blockchain, it is irreversible.

The specific implementation details will vary depending on the blockchain platform and programming language used to write the smart contract code implementing the non-custodial vault 320. Ethereum, for example, uses Solidity as its programming language for smart contracts.

Consequently, it can be seen that the transaction of cryptocurrency from the non-custodial vault 320 is controlled by the self-custody private key 125. No private keys are held by the non-custodial vault 320, so the controlling private key is held entirely within the custody of the owner of the payment card 100.

Once the transfer of cryptocurrency is complete, optionally a notification of success may be sent by a blockchain transaction monitor to any one or more of the entity represented in Figure 4

It can therefore be seen that the system, apparatuses and processes of the present disclosure enable existing payment network infrastructure to be used to authorise a transfer of cryptocurrency from a non-custodial vault. As a result, it is possible for users to purchase goods/services from merchants using their cryptocurrency assets in a seamless, straightforward way, without requiring them to have an internet connection during the transaction and without requiring them to entrust their cryptocurrency assets to a custodian.

By maintaining self-custody of the assets, the security of those assets may be improved as they should not be exposed to potential hacking and data breach risks of custodian wallets, and the user can take full ownership and responsibility for the safe guarding of their assets. Furthermore, by utilising existing payment network infrastructure and making the consumer and merchant user experience very similar to the experience they have with conventional payment cards such as debit and credit cards, the system should be very scalable and straightforward for consumers, merchants and payment networks to adopt. This is all achieved within a framework that allows for user self-enrolment so that user's do not need to have a bank account, or a proof of ID or address, which opens up electronic payments to a large group of people who previously have not been able to access such systems. Furthermore, it enables users to remain anonymous if they wish, such that electronic payments can be made but with the same level of anonymity of cash payments. The skilled person will readily appreciate that various alterations or modifications may be made to the above described aspects of the disclosure without departing from the scope of the disclosure.

The above description focuses on a payment card 100 that includes a conventional payment application 110 and a blockchain authorisation application 120. However, the payment card 100 is just one example electronic device on which they may reside. They may alternatively reside on any other suitable type of electronic device, such as a smartphone or tablet computer, where communications with the POS terminal 400 are conducted via any suitable communications protocol or architecture, such as NFC. In this case, the initial configuration of blockchain authorisation application 120 described with reference to Figure 2 may be performed via any suitable data connection (for example, an internet connection) between the personalisation bureau 210 and the electronic device on which the blockchain authorisation application 120 will reside (i.e., the electronic device will replace the payment card 100 in the process of Figure 2). The initial configuration process will be very similar to that of Figure 2, except that it may not require a separate secure key generation facility 215 - that functionality may instead be included within the blockchain authorisation application 120. Additionally or alternatively, the functionality of the personalisation bureau 210 may also be included within the blockchain authorisation application 120, in which case the processes of Steps S250 to S265 may be performed entirely by the blockchain authorisation application 120 during initialisation, and the public key part of the public-private key pair may be shared directly with the non-custodial payment card processor 220 from the blockchain authorisation application 120.

Whilst all of the interfaces represented by arrows and lines in the Figures show direct connections between each of the different entities and modules, it will be appreciated that there may be any number of intermediate entities or modules as part of those interfaces, for example communications routers, etc.

The aspects of the present disclosure described in all of the above may be implemented by software, hardware or a combination of software and hardware. The functionality of the blockchain authorisation application 120, the software application for self-provisioning 315, the blockchain request application 420, the acquirer 450, the payment scheme entity 460, the non-custodial payment card processor 220 and the non-custodial vault 320 may each be implemented by software comprising computer readable code, which when executed on the processor of any electronic device, performs the functionality described above. The software may be stored on any suitable computer readable medium, for example a non-transitory computer-readable medium, such as read-only memory, random access memory, CD-ROMs, DVDs, Blue-rays, magnetic tape, hard disk drives, solid state drives and optical drives. The computer-readable medium may be distributed over network-coupled computer systems so that the computer readable instructions are stored and executed in a distributed way.

The software application for self-provisioning 315 may be implemented as a distributed application (DApp) or any other type of computer program.

Whilst in Figure 4, and the related text, the acquirer 450 and payment scheme 460 are separate entities, in an alternative implementation there may instead be a single entity that performs the functionality of both the acquirer 450 and the payment scheme 460.

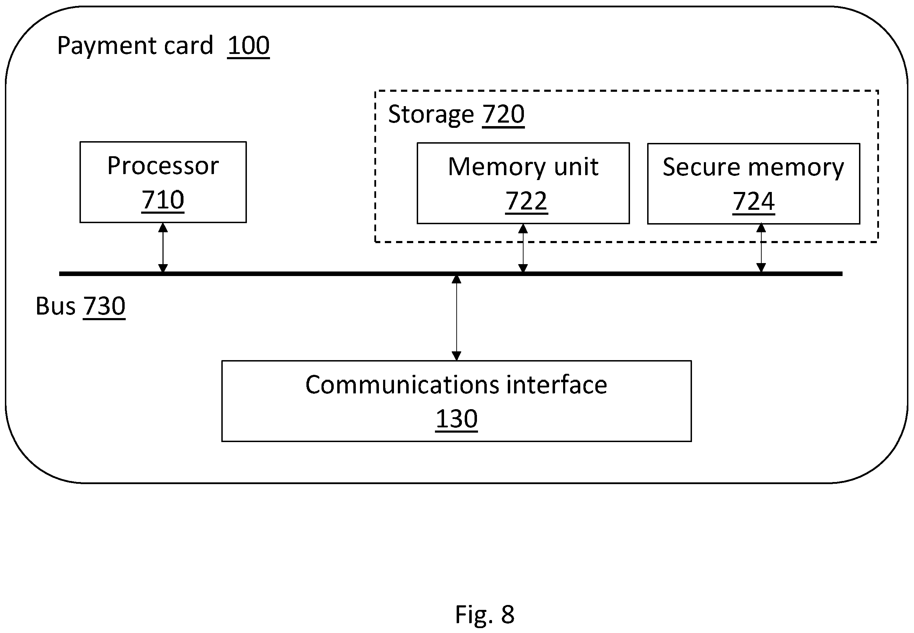

Figure 8 shows a non-limiting example of hardware that may be included within the payment card 100. The payment card includes a processor 710, storage 720 that comprises at least one memory unit 722 and at least one secure memory 724 (such as a Secure Element) and the communications interface 130, all of which are communicatively coupled via a bus 730. The computer program code for the blockchain authorisation application 120 may be stored in the memory unit 722 and the self-custody private key 125 may be stored in the secure memory 724. The computer program code for the conventional payment application 110 may also be stored in the memory unit 722, or in a separate memory unit in the storage 720. Likewise, any sensitive data used by the conventional payment application 110, such as cryptographic keys, may be stored in the secure memory 724, or some other secure memory in the storage 720.

The processor 710 may comprise one or more of any suitable types of processors, such as a microprocessor, FPGA, GPU, ASIC and/or dedicated logic circuits or state machines. The memory unit 722 may, for example, be any suitable type of non-volatile memory unit. The communications interface 130 may be configured for any suitable type of wired or wireless/contactless communications, in particular wireless short range communications such as NFC, Bluetooth, Zigbee, etc.

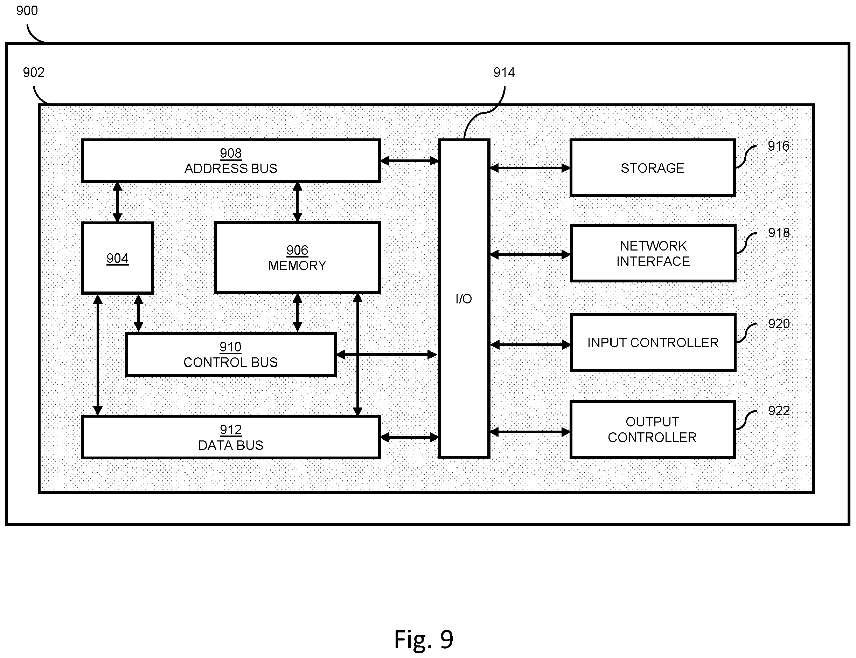

Figure 9 shows an example electronic device or computing system for carrying out the methods of the present disclosure. Specifically, Figure 9 shows a block diagram of an implementation of an electronic device according to example implementations of the present disclosure. The electronic device 900 can be configured to perform any of the operations disclosed herein such as, for example, any of the operations of the payment card 100, the POS terminal 400, the acquirer 450, the payment scheme 460, the non-custodial payment card processor 220, the non-custodial vault 320, or the steps discussed with reference to the software application for self-provisioning 315 in Figure 3. The computing system 900 includes one or more computing device(s) 902. The one or more computing device(s) 902 of computing system 900 comprise one or more processors 904 and memory 906. The one or more processors 904 can be any general purpose processor(s) configured to execute a set of instructions. For example, the one or more processors 904 can be one or more general-purpose processors, one or more field programmable gate array (FPGA), and/or one or more application specific integrated circuits (ASIC). In one implementation, the one or more processors 904 include one processor. Alternatively, the one or more processors 904 include a plurality of processors that are operatively connected. The one or more processors 904 are communicatively coupled to memory 906 via address bus 908, control bus 910, and data bus 912. Memory 906 can be a random access memory (RAM), a read only memory (ROM), a persistent storage device such as a hard drive, an erasable programmable read only memory (EPROM), and/or the like. The one or more computing device(s) 902 further comprise I/O interface 914 communicatively coupled to address bus 908, control bus 910, and data bus 912.

Memory 906 can store information that can be accessed by one or more processors 904. For instance, memory 906 (e.g., one or more non-transitory computer-readable storage mediums, memory devices) can include computer-readable instructions (not shown) that can be executed by one or more processors 904. The computer-readable instructions can be software written in any suitable programming language or can be implemented in hardware. Additionally, or alternatively, the computer-readable instructions can be executed in logically and/or virtually separate threads on one or more processors 904. For example, memory 906 can store instructions (not shown) that when executed by one or more processors 904 cause one or more processors 904 to perform operations such as any of the operations and functions for which computing system 900 is configured, as described herein. In addition, or alternatively, memory 906 can store data (not shown) that can be obtained, received, accessed, written, manipulated, created, and/or stored. In some implementations, the one or more computing device(s) 902 can obtain from and/or store data in one or more memory device(s) that are remote from the computing system 900.

Computing system 900 further comprises storage unit 916, network interface 918, input controller 920, and output controller 922. Storage unit 916, network interface 918, input controller 920, and output controller 922 are communicatively coupled to the central control unit (i.e., the memory 906, the address bus 908, the control bus 910, and the data bus 912) via I/O interface 914.

Storage unit 916 is a computer readable medium, preferably a non-transitory computer readable medium, comprising one or more programs, the one or more programs comprising instructions which when executed by the one or more processors 904 cause computing system 900 to perform the method steps of the present disclosure. Alternatively, storage unit 916 is a transitory computer readable medium. Storage unit 916 can be a persistent storage device such as a hard drive, a cloud storage device, or any other appropriate storage device.

Network interface 918 can be a Wi-Fi module, a network interface card, a Bluetooth module, and/or any other suitable wired or wireless communication device. In an example, network interface 918 is configured to connect to a network such as a local area network (LAN), or a wide area network (WAN), the Internet, or an intranet.

## Aspects of the disclosure

Non-limiting aspects of the disclosure are set out in the following numbered clauses:

The payment card and POS terminal

1. A payment card comprising:

a communications interface;
a self-custody private key; and
a blockchain authorisation application coupled to the communications interface and configured, during a payment transaction, to:

receive from a point of sale, POS, terminal, via the communications interface, a blockchain authorisation request;
generate a blockchain authorisation signature by signing the blockchain authorisation request; and
output the blockchain authorisation signature to the communications interface for communicating to the POS terminal,

wherein the blockchain authorisation signature is for authorising a transfer of an amount of cryptocurrency from a non-custodial vault associated with the self-custody private key.

2. The payment card of clause 1, further comprising:
a conventional payment application coupled to the communication interface and configured, during a payment transaction, to:

receive from the POS terminal, via the communications interface, a conventional payment request; and
output to the POS terminal, via the communication interface, an indication that the payment card is for authorising a cryptocurrency transaction.

3. The payment card of clause 2, configured to receive the blockchain authorisation request after the conventional payment application has output to the POS terminal the indication that the payment card is for authorising a cryptocurrency transaction.

4. The payment card of clause 2 or clause 3, wherein communications between the conventional payment application and the POS terminal conform to a conventional payment standard.

5. The payment card of clause 4, wherein the conventional payment standard comprises an EMVCo standard.

6. The payment card of any of clauses 2 to 5, wherein the indication that the payment card is for authorising a cryptocurrency transaction comprises an application ID, AID, that is registered as indicating that the payment card is for authorising a cryptocurrency transaction.

7. The payment card of any preceding clause, wherein the blockchain authorisation request comprises at least one of:

an amount to be paid to a payee;
a currency associated with the amount to be paid to a payee;
a payee identifier.

8. The payment card of any preceding clause, wherein the communications interface comprises at least one of:

a near-field communications, NFC, interface;
a physical electrical pad interface.

9. A computer implemented method of authorising a cryptocurrency transaction comprising at blockchain authorisation application:

receiving from a point of sale, POS, terminal, a blockchain authorisation request;
generating a blockchain authorisation signature by signing the blockchain authorisation request; and
outputting the blockchain authorisation signature for communication to the POS terminal,
wherein the blockchain authorisation signature is for authorising a transfer of an amount of cryptocurrency from a non-custodial vault associated with the self-custody private key.

10. The computer implemented method of clause 8, further comprising a conventional payment application:

receiving from the POS terminal a conventional payment request; and
outputting, for communication to the POS terminal, an indication that the payment card is for authorising a cryptocurrency transaction,
wherein the blockchain authorisation application receives the blockchain authorisation request after the conventional payment application has output the indication that the payment card is for authorising a cryptocurrency transaction.

11. A computer program configured, when executed on one or more processors, to:

generate a blockchain authorisation signature by signing a blockchain authorisation request that is received from a point of sale, POS, terminal; and
output the blockchain authorisation signature for communication to the POS terminal,
wherein the blockchain authorisation signature is for authorising a transfer of an amount of cryptocurrency from a non-custodial vault associated with the self-custody private key.

12. An electronic device comprising:

at least one processor;
a communications interface for communicating with a point of sale, POS, terminal; and
at least one memory that comprises:

a self-custody private key; and
a blockchain authorisation application configured to receive from a point of sale, POS, terminal, via the communications interface, a blockchain authorisation request;

generate a blockchain authorisation signature by signing the blockchain authorisation request; and
output the blockchain authorisation signature to the communications interface for communicating to the POS terminal,

wherein the blockchain authorisation signature is for authorising a transfer of an amount of cryptocurrency from a non-custodial vault associated with the self-custody private key.

13. The electronic device of clause 12, wherein the electronic device is a payment card.

14. A point of sale, POS, terminal comprising:

a first communications interface for communicating with a payer electronic device;
a second communications interface for communicating with a payment network electronic device; and
a blockchain request application configured to:

generate a blockchain authorisation request;
output the blockchain authorisation request to the first communications interface for communicating to a blockchain authorisation application on the payer electronic device;
receive a blockchain authorisation signature, via the first communications interface, from the payer electronic device; and
output the blockchain authorisation signature for communicating to the payment network electronic device,

wherein the blockchain authorisation signature are for authorising a transfer of an amount of cryptocurrency from a non-custodial vault associated with the self-custody private key.

15. The POS terminal of clause 14, further comprising a conventional transaction application configured to:

receive, from the blockchain request application, the blockchain authorisation signature;
generate a conventional payment instruction comprising the blockchain authorisation signature; and
output the conventional payment instruction to the second communications interface for communicating to the payment network device.

16. The POS terminal of clause 15, wherein the conventional payment instruction conforms to a conventional payment standard.

17. The POS terminal of clause 16, wherein the blockchain authorisation signature is included in an additional data field of the conventional payment instruction defined by the conventional payment standard

18. The POS terminal of any of clauses 15 to 17, wherein the blockchain request application is further configured to:

receive transaction data from the conventional transaction application; and
generate the blockchain authorisation request using the transaction data.

19. The POS terminal of clause 18, wherein the transaction data comprises at least one of:

an amount to be paid to a payee;
a currency associated with the amount to be paid to a payee;
a payee identifier.

20. The POS terminal of clause 18 or clause 19, wherein the conventional transaction application is configured to:

engage in conventional payment communications, via the first communications interface, with a conventional payment application on the payer electronic device;
identify, using the conventional payment communications, that the payer electronic device is for authorising a cryptocurrency transaction; and
generate the transaction data for communicating to the blockchain request application.

21. The POS terminal of clause 20, wherein the conventional transaction application is configured to identify that the payer electronic device is for authorising a cryptocurrency transaction by:
identifying that an application ID, AID, that is received from the conventional payment application on the payer electronic device, is registered as indicating that the payer electronic device is for authorising a cryptocurrency transaction.

22. The POS terminal of any of clauses 14 to 21, wherein the payer electronic device is a payment card.

23. The POS terminal of any of clauses 14 to 22, wherein the first communications interface comprises at least one of:

a near-field communications, NFC, interface;
a plurality of conductive communications pins for physically engaging with an electrical pad interface associated with the payer electronic device.

24. A computer implemented method for a Point of Sale, POS, terminal to facilitate a cryptocurrency transfer, the method comprising:

generating a blockchain authorisation request;
outputting the blockchain authorisation request for communication from the POS terminal to a blockchain authorisation application on a payer electronic device;
receiving a blockchain authorisation signature from the payer electronic device; and
outputting the blockchain authorisation signature for communication from the POS terminal to a payment network electronic device,

wherein the blockchain authorisation signature is for authorising a transfer of an amount of cryptocurrency from a non-custodial vault associated with the self-custody private key.

25. The computer implemented method of clause 24, wherein the blockchain authorisation signature is output as part of a conventional payment instruction that conforms to a conventional payment standard.

26. The computer implemented method of clause 25, wherein the blockchain authorisation signature is included in an additional data field of the conventional payment instruction defined by the conventional payment standard.

27. The computer implemented method of any of clauses 24 to 26, wherein the blockchain authorisation request comprises at least one of:

an amount to be paid to a payee;
a currency associated with the amount to be paid to a payee;
a payee identifier.

28. The computer implemented method of any of clauses 24 to 27, further comprising, prior to generating the blockchain authorisation request:
identifying, using data received as part of conventional payment communications between the POS terminal and the payer electronic device, that the payer electronic device is for authorisation a cryptocurrency transaction.

29. The computer implemented method of clause 28, wherein identifying that the payer electronic device is for authorising a cryptocurrency transaction comprises:
identifying that an application ID, AID, that is received from payer electronic device as part of conventional payment communications, is registered as indicating that the payer electronic device is for authorising a cryptocurrency transaction.

30. A computer program configured, when executed on one or more processors, to perform the method of any of clauses 24 to 29.

<u>Software application for self-provisioning</u>

1. A method for associating a payment card with a non-custodial vault such that a self-custody private key stored on the payment card can be used to authorise a transfer of cryptocurrency from the non-custodial vault, the method comprising:

checking whether the payment card is already associated with any non-custodial vault; and
if the payment card is not associated with any non-custodial vault, outputting to the non-custodial vault a public key that is associated with the payment card, wherein the public key and self-custody private key together form a public-private key pair such that the public key is for use by the non-custodial vault to check digital signatures generated by the payment card using the self-custody private key.

2. The method of clause 1, wherein checking whether the payment card is already associated with any non-custodial vault comprises:

outputting to a non-custodial payment card processor a value that is unique to the payment card, wherein the non-custodial payment card processor comprises a record of payment cards and any association they have with non-custodial vaults; and
receiving from the non-custodial payment card processor a communication indicative of whether the payment card is already associated with any non-custodial vault.

3. The method of clause 2, wherein the record of payment cards comprises the public key associated with each payment card, and the method further comprises:
if the payment card is not associated with any non-custodial vault, receiving from the non-custodial payment card processor, the public key for the payment card.

4. The method of clause 2 or clause 3, further comprising:
if it is determined that the payment card is not associated with any non-custodial vault, outputting an address for the non-custodial vault to the non-custodial payment card processor, wherein the address for the non-custodial vault is for the non-custodial payment card processor to store in the record of payment cards with an association to the payment card such that the non-custodial payment card processor then has a record of the association of the payment card and the non-custodial vault.

5. The method of any of clauses 2 to 4, further comprising:
obtaining the value that is unique to the payment card.

6. The method of clause 5, wherein the value that is unique to the payment card is visually encoded on the payment card.

7. The method of any preceding clause, further comprising:
deploying the non-custodial vault on a blockchain by broadcasting a transaction to the blockchain.

8. A computer program configured, when executed on one or more processors, to perform the method of any preceding clause.

9. An electronic device configured to perform the method of any of clauses 1 to 7.

Non-custodial payment card processor

1. A non-custodial payment card processor for maintaining a record of payment cards, wherein each of the payment cards comprise a respective self-custody private key for authorising a transfer of cryptocurrency from a non-custodial vault, the non-custodial payment card processor comprising:
the record of payment cards, which comprises for each recorded payment card:

a unique identifier of the payment card;
a public key that is associated with the payment card, wherein the public key and self-custody private key together form a public-private key pair; and
an address for any non-custodial vault that is associated with the payment card.

2. The non-custodial payment card processor of clause 1, configured to:

receive, during a chip card personalisation process for a new payment card, a unique identifier of the new payment card and a public key associated with the new payment card; and
store, in the record of payment cards, the received unique identifier of the new payment card and the public key of the new payment card.

3. The non-custodial payment card processor of clause 2, wherein the unique identifier of the new payment card is the primary account number, PAN, of the new payment card, or a tokenised version of the PAN of the new payment card.

4. The non-custodial payment card processor of clause 2 or clause 3, further configured to:

receive, during the chip card personalisation process for the new payment card, a value that is unique to the new payment card; and
associate, in the record of payment cards, the value that is unique to the new payment card with the unique identifier of the new payment card and the public key of the new payment card.

5. The non-custodial payment card processor of clause 4, wherein the value that is unique to the new payment card is encoded on the new payment card.

6. The non-custodial payment card processor of clause 5, wherein the value that is unique to the new payment card is encoded as a visual code on the new payment card.

7. The non-custodial payment card processor of any preceding clause, configured to:

receive a value that is unique to a payment card;
identify the payment card in the record of payment cards; and
output a reply that is indicative of whether the identified payment card is associated with any non-custodial vault.

8. The non-custodial payment card processor of clause 7, further configured to:

receive an address of a non-custodial vault to which the payment card is to be associated; and
update the record of payment cards to include the address of the non-custodial vault in association with the unique identifier of the payment card.

9. The non-custodial payment card processor of any preceding clause, further configured to:

receive a transaction request comprising a unique identifier of a particular payment card;
identify, using in the record of payment cards, the address for the non-custodial vault associated with the particular payment card; and
output a transaction instruction that is based on the transaction request for communication to the non-custodial vault associated with the particular payment card.

10. The non-custodial payment card processor of any preceding clause, wherein the unique identifier of the payment card comprises a primary account number, PAN, of the payment card, or a tokenised version of the PAN of the payment card.

11. A computer program configured, when executed on one or more processors, to perform the functionality of the non-custodial payment card processor of preceding clause.

<u>Payment scheme entity</u>

1. A method for processing a payment data packet, the method comprising:

receiving a payment data packet, wherein the payment data packet comprises a blockchain authorisation signature generated by a payment card comprising a self-custody private key, wherein the blockchain authorisation signature is for authorising a transfer of an amount of cryptocurrency from a non-custodial vault associated with the payment card;
generating a payment scheme signature by signing, using a payment scheme private key, a payload comprising at least some of the content of the payment data packet; and
outputting a transaction request comprising at least the payload and the payment scheme signature.

2. The method of clause 1, wherein the payment data packet further comprises:

an address of a receiving wallet to which the amount of cryptocurrency is to be transferred; and
an indication of the amount of cryptocurrency to be transferred to the receiving wallet,
wherein the payload comprises the blockchain authorisation signature, the address of the receiving wallet, and the indication of the amount of cryptocurrency to be transferred to the receiving wallet.

3. The method of clause 2, wherein the payment data packet further comprises:

a unique identifier of the transaction, and
wherein the payload further comprises the unique identifier of the transaction.

4. The method of any preceding clause, wherein the payment data packet conforms to a conventional payment standard.

5. The non-custodial payment card processor of clause 4, wherein the conventional payment standard comprises an EMVCo standard.

6. The non-custodial payment card processor of any preceding clause, wherein the receiving wallet is an acquirer's settlement crypto wallet.

7. A computer program configured, when executed on one or more processors, to perform the method of any preceding clause.

8. An electronic device configured to perform the method of any of clauses 1 to 6.

9. The electronic device of clause 8, wherein the electronic device is a payment scheme entity.

Acquirer

1. A method of processing a conventional payment data packet, the method comprising:

receiving a conventional payment data packet, wherein the conventional payment data packet comprises a blockchain authorisation signature generated by a payment card comprising a self-custody private key, wherein the blockchain authorisation signature is for authorising a transfer of an amount of cryptocurrency from a non-custodial vault associated with the payment card;
updating the conventional payment data packet to include an address of a receiving wallet to which the amount of cryptocurrency is to be transferred; and
outputting the updated conventional payment data packet.

2. The method of clause 1, wherein the conventional payment data packet is received from a point of sale, POS, terminal.

3. The method of any preceding clause, wherein the updated conventional payment data packet is output to a payment scheme entity.

4. The method of any preceding clause, wherein the conventional payment data packet comprises an amount to be paid to a payee and a currency associated with the amount to be paid to the payee, wherein the currency associated with the amount to be paid to the payee is different to a currency of the cryptocurrency that is to be transferred to the receiving wallet, and wherein the method further comprises:

determining the amount of cryptocurrency to be transferred to the receiving wallet based on the amount to be paid to the payee and an exchange rate between the currency associated with the amount to be paid to the payee and the currency of the cryptocurrency that is to be transferred to the receiving wallet, and
wherein updating the conventional payment data packet further comprises adding an indication of the determined amount of cryptocurrency to the conventional payment data packet.

5. The method of any preceding clause, further comprising:

determining a unique identifier for the transaction request,
wherein updating the transaction request further comprises adding the determined unique identifier to the transaction request.

6. The method of any preceding clause, wherein the conventional payment data packet conforms to a conventional payment standard.

7. The non-custodial payment card processor of any preceding clause, wherein the receiving wallet is an acquirer's settlement crypto wallet.

8. A computer program configured, when executed on one or more processors, to perform the method of any preceding clause.

9. An electronic device configured to perform the method of any of clauses 1 to 7.

10. The electronic device of clause 9, wherein the electronic device is an acquirer entity.

Non-custodial vault

1. A method for validating a transaction instruction for transferring an amount of cryptocurrency from a non-custodial vault to a receiving wallet, the method comprising the non-custodial vault:

receiving the transaction instruction comprising:

a blockchain authorisation signature;
an address of the receiving wallet; and
an indication of the amount of cryptocurrency to be transferred to the receiving wallet;

performing a cryptographic check of at least part of the transaction instruction, wherein the cryptographic check comprises:
checking the blockchain authorisation signature to determine if it was generated using a self-custody private key stored on a payment card that is associated with the non-custodial vault, wherein checking the blockchain authorisation signature uses a public key that is stored in the non-custodial vault and that forms a public-private key pair with the self-custody private key; and
if the cryptographic check of at least part of the transaction instruction is passed, performing the transfer of the amount of cryptocurrency from the non-custodial vault to the receiving wallet using the address of the receiving wallet and the indication of the amount of cryptocurrency to be transferred to the receiving wallet.

2. The method of clause 1, wherein the transaction instruction further comprises at least one of: an amount to be paid to a payee, a currency associated with the amount to be paid to the payee, and a payee identifier, and
wherein checking the blockchain authorisation signature further comprises checking that the at least one of: the amount to be paid to the payee, the currency associated with the amount to be paid to the payee, and the payee identifier, formed a payload that was signed using the self-custody private key to generate the blockchain authorisation signature.

3. The method of any preceding clause, wherein the transaction instruction further comprises a payment scheme signature, and
wherein the cryptographic check further comprises checking the payment scheme signature using a payment scheme public key to determine if the payment scheme signature was generated by a payment scheme associated with the payment scheme public key.

4. The method of clause 3, wherein checking the payment scheme signature further comprises checking that a payload that was signed by the payment scheme to generate the payment scheme signature comprised:

the blockchain authorisation signature;
the address of the receiving wallet; and
the indication of the amount of cryptocurrency to be transferred to the payee wallet.

5. The method of clause 4, wherein the transaction instruction further comprises a unique identifier of the transaction, and
wherein checking the payment scheme signature further comprises checking that the payload that was signed by the payment scheme to generate the payment scheme signature also comprised the unique identifier of the transaction.

6. The method of any preceding clause, wherein performing the transfer of the amount of cryptocurrency from the non-custodial vault to the receiving wallet comprises:

reserving the amount of cryptocurrency indicated in the transaction instruction; and
outputting a confirmation of reservation.

7. The method of clause 6, wherein performing the transfer of the amount of cryptocurrency from the non-custodial vault to the receiving wallet further comprises:

after reserving the amount of cryptocurrency, determining if conditions for funds release are met, and
if the conditions for funds release are met, completing the transfer of the amount of cryptocurrency from the non-custodial vault to the receiving wallet.

8. The method of clause 7, wherein if the conditions for funds release are not met, the method comprises un-reserving the cryptocurrency.

9. The method of clause 7 or clause 8, wherein the conditions for funds release comprises the elapsing of a predetermined period of time since the reserving the amount of cryptocurrency without receiving any notifications indicative of a need to reverse the transaction.

10. The method of any preceding clause, further comprising:

receiving, during payment card initialisation, the public key that the forms the public-private key pair with the self-custody private key; and
storing the received public key for use in validating transaction requests originating from the payment card.

11. A computer program configured, when executed on one or more processors, to perform the method of any preceding clause.

12. An electronic device configured to perform the method of any of clauses 1 to 10.

**Claims**

1. An electronic device comprising:

a communications interface;
a self-custody private key; and
a blockchain authorisation application coupled to the communications interface and configured to:

receive from a point of sale, POS, terminal, via the communications interface, a blockchain authorisation request;
generate a blockchain authorisation signature by signing the blockchain authorisation request; and
output the blockchain authorisation signature to the communications interface for communicating to the POS terminal,

wherein the blockchain authorisation signature is for authorising a transfer of an amount of cryptocurrency from a non-custodial vault associated with the self-custody private key.

2. The electronic device of claim 1, further comprising:
a conventional payment application coupled to the communication interface and configured to:

receive from the POS terminal, via the communications interface, a conventional payment request; and
output to the POS terminal, via the communication interface, an indication that the payment card is for authorising a cryptocurrency transaction.

3. The electronic device of claim 2, configured to receive the blockchain authorisation request after the conventional payment application has output to the POS terminal the indication that the payment card is for authorising a cryptocurrency transaction.

4. The electronic device of claim 2 or claim 3, wherein communications between the conventional payment application and the POS terminal conform to a conventional payment standard.

5. The electronic device of any of claims 2 to 4, wherein the indication that the payment card is for authorising a cryptocurrency transaction comprises an application ID, AID, that is registered as indicating that the payment card is for authorising a cryptocurrency transaction.

6. The electronic device of any preceding claim, wherein the blockchain authorisation request comprises at least one of:

> an amount to be paid to a payee;
> a currency associated with the amount to be paid to a payee;
> a payee identifier.

7. The electronic device of any preceding claim, wherein the electronic device is a payment card.

8. A computer implemented method of authorising a cryptocurrency transaction comprising at blockchain authorisation application:

> receiving from a point of sale, POS, terminal, a blockchain authorisation request;
> generating a blockchain authorisation signature by signing the blockchain authorisation request; and
> outputting the blockchain authorisation signature for communication to the POS terminal,
> wherein the blockchain authorisation signature is for authorising a transfer of an amount of cryptocurrency from a non-custodial vault associated with the self-custody private key.

9. The computer implemented method of claim 8, further comprising a conventional payment application:

> receiving from the POS terminal a conventional payment request; and
> outputting, for communication to the POS terminal, an indication that the payment card is for authorising a cryptocurrency transaction,
> wherein the blockchain authorisation application receives the blockchain authorisation request after the conventional payment application has output the indication that the payment card is for authorising a cryptocurrency transaction.

10. A computer program configured, when executed on one or more processors, to:

> generate a blockchain authorisation signature by signing a blockchain authorisation request that is received from a point of sale, POS, terminal; and
> output the blockchain authorisation signature for communication to the POS terminal,
> wherein the blockchain authorisation signature is for authorising a transfer of an amount of cryptocurrency from a non-custodial vault associated with the self-custody private key.

11. A point of sale, POS, terminal comprising:

> a first communications interface for communicating with a payer electronic device;
> a second communications interface for communicating with a payment network electronic device; and
> a blockchain request application configured to:
>
>> output a blockchain authorisation request to the first communications interface for communicating to a blockchain authorisation application on the payer electronic device;
>> receive a blockchain authorisation signature, via the first communications interface, from the payer electronic device; and
>> output the blockchain authorisation signature for communicating to the payment network electronic device,
>
> wherein the blockchain authorisation signature are for authorising a transfer of an amount of cryptocurrency from a non-custodial vault associated with the self-custody private key.

12. The POS terminal of claim 11, further comprising a conventional transaction application configured to:

> receive, from the blockchain request application, the blockchain authorisation signature;
> generate a conventional payment data packet comprising the blockchain authorisation signature; and
> output the conventional payment data packet to the second communications interface for communicating to the payment network device.

Generate the BAR

**13.** The POS terminal of claim 11 or claim 12, wherein the conventional transaction application is configured to:

engage in conventional payment communications, via the first communications interface, with a conventional payment application on the payer electronic device;

identify, using the conventional payment communications, that the payer electronic device is for authorising a cryptocurrency transaction; and

instruct the blockchain request application to communicate the blockchain authorisation request to the payer electronic device.

**14.** A computer implemented method for facilitating a cryptocurrency transfer, the method comprising:

outputting a blockchain authorisation request for communication from the POS terminal to a blockchain authorisation application on a payer electronic device;

receiving a blockchain authorisation signature from the payer electronic device; and

outputting the blockchain authorisation signature for communication from the POS terminal to a payment network electronic device,

wherein the blockchain authorisation signature is for authorising a transfer of an amount of cryptocurrency from a non-custodial vault associated with the self-custody private key.

**15.** A computer program configured, when executed on one or more processors, to perform the method of claim 14.

EP 4 521 325 A1

Payment card  100

Conventional payment
application
110

Self-custody private key
125

Blockchain authorisation
application
120

Communications interface
130

Fig. 1

Fig. 2

Personalisation Bureau
210

Secure Key Generation
Facility
215

Payment Card
100

Non-Custodial Payment
Card Processor
220

S250

S255

S260

S265

S270

S275

EP 4 521 325 A1

| Card user/owner 310 | Software application for self-provisioning 315 | Non-Custodial Payment Card Processor 220 | Non-custodial vault 320 |
|---|---|---|---|

S330

S335

S340

S345

S350

S355

S360

S365

S370

S375

S380

S385

S390

S392

S394

S396

Fig. 3

EP 4 521 325 A1

**100**

**125**

**110**

**120**

**130**

POS **400**

First communications interface **430**

Conventional transaction application **410**

Blockchain request application **420**

Second communications interface **440**

Acquirer **450**

Payment scheme **460**

Non-custodial payment card processor **220**

Blockchain gateway **470**

Non-custodial vault **320**

Blockchain

Fig. 4

Conventional
transaction application
410

Blockchain request
application
420

Blockchain authorisation
application
120

Secure memory
505

S510

S520

S530

S535

S540

S550

Fig. 5

| Description | Field No. | Authorization MTI 1100 | Advice MTI 1220 | Financial MTI 1200 | Reversal MTI 1420 |
|---|---|---|---|---|---|
| PAN | 2 | M | M | M | M |
| Processing Code | 3 | M | M | M | M |
| Amount transaction | 4 | M | M | M | M |
| Date and Time transmission | 7 | M | M | M | M |
| Stan | 11 | M | M | M | M |
| TimeStamp | 12 | M | M | M | M |
| Expiry Date | 14 | M | M | M | O |
| POS entry mode | 22 | M | M | M | N/A |
| Card sequence number | 23 | O | O | O | O |
| Function code | 24 | M | M | M | M |
| Message Reason Code | 25 | O | O | O | O |
| MCC | 26 | N/A | N/A | N/A | N/A |
| Acquirer IIC | 32 | N/A | N/A | N/A | N/A |
| Track2 | 35 | M | M | M | M |
| Retrieval Reff. Number | 37 | M | M | M | M |
| Approval Code | 38 | N/A | O | N/A | O |
| Terminal ID | 41 | M | M | M | M |
| Merchant ID | 42 | M | M | M | M |
| Merchant name/location | 43 | M | M | M | M |
| Message control data elements | 48 | O | N/A | O | N/A |
| Currency code | 49 | M | M | M | O |
| PIN data | 52 | O | O | O | N/A |
| Security related control info | 53 | O | O | O | N/A |
| EMV data | 55 | O | O | O | O |
| Original Data Elements | 56 | N/A | N/A | N/A | M |
| Product data | 63 | N/A | N/A | N/A | N/A |
| Additional Data | 122 | N/A | N/A | N/A | N/A |

Fig. 6

Fig. 7

Payment card  100

Storage 720

Processor
710

Memory unit
722

Secure memory
724

Bus 730

Communications interface
130

Fig. 8

Fig. 9

EP 4 521 325 A1

Europäisches
Patentamt

European
Patent Office

Office européen
des brevets

# EUROPEAN SEARCH REPORT

Application Number

EP 23 19 7653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/069875 A1 (AHMAD MOHAMMED SADIQ [US]) 9 March 2023 (2023-03-09) * paragraphs [0004], [0028], [0030], [0037], [0044], [0050]; figure 1a * | 1-15 | INV. G06Q20/06 G06Q20/22 G06Q20/36 G06Q20/38 G06Q20/40 |
| A | US 2015/356555 A1 (PENNANEN ANTTI [FI]) 10 December 2015 (2015-12-10) * the whole document * | 1-15 | |

TECHNICAL FIELDS
SEARCHED        (IPC)

G06Q

The present search report has been drawn up for all claims

| Place of search | Date of completion of the search | Examiner |
|---|---|---|
| The Hague | 18 December 2023 | Verhoef, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 7653**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-12-2023**

| Patent document cited in search report | Publication date | Patent family member(s) | Publication date |
|---|---|---|---|
| US 2023069875 A1 | 09-03-2023 | US 2023069875 A1 | 09-03-2023 |
| | | WO 2023023137 A1 | 23-02-2023 |
| US 2015356555 A1 | 10-12-2015 | BR 102015012783 A2 | 12-01-2016 |
| | | EP 2953076 A1 | 09-12-2015 |
| | | US 2015356555 A1 | 10-12-2015 |

EPO FORM P0459

For more details about this annex : see Official Journal of the European Patent Office, No. 12/82